Europäisches. Patentamt

(19) European Patent Office

Office européen des brevets

(11) Veröffentlichungsnummer : **0 001 862**
B2

# (12) NEUE EUROPÄISCHE PATENTSCHRIFT

(45) Veröffentlichungstag der neuen Patentschrift :
12.11.86

(21) Anmeldenummer : 78200273.7

(22) Anmeldetag : 30.10.78

(51) Int. Cl.⁴ : **B 01 J 27/08**, C 08 F 4/02,
C 08 F 4/64, C 08 F 10/00

(54) Katalytische Titanhalogenidkomponente und deren Verwendung zur Polymerisation von Alkylenen-1.

(30) Priorität : 01.11.77 NL 7711974

(43) Veröffentlichungstag der Anmeldung :
16.05.79 Patentblatt 79/10

(45) Bekanntmachung des Hinweises auf die Patenterteilung : 07.07.82 Patentblatt 82/27

(45) Bekanntmachung des Hinweises auf die Entscheidung
über den Einspruch : 12.11.86 Patentblatt 86/46

(84) Benannte Vertragsstaaten :
BE DE FR GB SE

(56) Entgegenhaltungen :
DE-C-   379 203
FR-A- 1 256 365
NL-A- 7 208 558
NL-A- 7 509 735
US-A- 1 702 301
US-A- 4 298 718
Die Akte enthält technische Angaben, die nach dem
Eingang der Anmeldung eingereicht wurden und die
nicht in dieser Patentschrift enthalten sind.

(73) Patentinhaber : STAMICARBON B.V.
Mijnweg 1
NL-6167 AC Geleen (NL)

(72) Erfinder : Loontjens, Jacobus Antonius
Synagogeplantsoen 76
NL-6231 KK Meerssen (NL)

(74) Vertreter : Hoogstraten, Willem Cornelis Roeland et al
OCTROOIBUREAU DSM Postbus 9
NL-6160 MA Geleen (NL)

EP 0 001 862 B2

## Beschreibung

Die Erfindung betrifft eine katalytische Titanhalogenidkomponente auf einem Magnesiumhalogenid als Trägerstoff und ein Verfahren zur Polymerisation von Alkylenen-1 sowie zur Copolymerisation von Alkenen-1 untereinander oder mit Äthylen unter Verwendung eines Katalysatorsystems, das eine solche Titanhalogenidkomponente enthält.

Eine solche Titanhalogenidkomponente und ein solches Verfahren ist aus der offengelegten niederländischen Patentanmeldung 7208558 bekannt, die ein Katalysatorsystem zur Polymerisation von Alkylenen-1 beschreibt, in dem die Titanhalogenidkomponente aus einem Titanhalogenid auf einem wasserfesten Magnesiumhalogenid als Trägerstoff besteht und als Organoaluminiumkomponente das Produkt einer Additionsreaktion zwischen einer Trialkylaluminiumverbindung und einem Ester einer sauerstoffhaltigen organischen Säure verwendet wird. Ein derartiges bei diesem bekannten Verfahren benutztes Additionsreaktionsprodukt setzt sich gewöhnlich zusammen aus einem Gemisch eines Komplexes der Trialkylaluminiumverbindung und des Esters einerseits und einer freien Trialkylaluminiumverbindung andererseits. Ein derartiges Katalysatorsystem ist besonders aktiv in der Polymerisation von Propylen, Butylen-1,4-Methylpentylen-1, und anderen Alkylenen-1, die Stereospezifität aber lässt zu wünschen übrig.

Gemäss der offengelegten niederländischen Patentanmeldung 7509735 enthält die Organoaluminiumkomponente zugleich ein Dialkylaluminiumhalogenid und ist die Organoaluminiumkomponente vorzugsweise frei von nicht-komplexierter Trialkylaluminiumverbindung, wodurch eine verbesserte Stereospezifität erzielt wird, welche allerdings noch nicht ganz zufriedenstellend ist. Der Markt für ataktische Polyalkylene-1 ist sehr beschränkt, so dass das Bedürfnis besteht, die Bildung dieses Produktes, das bei der Herstellung von isotaktischem Produkt anfällt, zu verringern.

Es wurde nunmehr gefunden, dass die Stereospezifität eines solchen Katalysatorsystems wesentlich gesteigert werden kann, indem man als Trägerstoff ein Magnesiumhalogenid verwendet, das nicht nur zumindest praktisch wasserfrei, sondern auch zumindest praktisch magnesiumoxidfrei ist und das durch Erhitzung von wasser- und/oder magnesiumoxidhaltigem Magnesiumhalogenid in einem Strom von Kohlenstoffhalogeniddampf und/oder einem gasförmigen Gemisch aus Kohlenmonoxid und Halogen gewonnen wird.

Erfindungsgemäss enthält eine für die Polymerisation von Alkylenen-1 oder Copolymerisation von Alkylenen-1 untereinander oder mit Äthylen verwendbare Titanhalogenidkomponente auf einem Magnesiumhalogenid als Trägerstoff ein Magnesiumhalogenid, das weniger als 0,2 Gew.-%, vorzugsweise maximal 0,1 Gew.%, Wasser und an Magnesiumoxid weniger als 0,1, vorzugsweise maximal 0,01 berechnet als mgäq mit verdünnter starker Säure, z. B. 0,1 N Salzsäure, titrierbare Base je g Magnesiumhalogenid enthält und das gewonnen ist durch Erhitzung von wasser- und/oder magnesiumoxidhaltigem Magnesiumhalogenid in einem Gasstrom von Kohlenstoffhalogeniddampf und/oder einem Gemisch aus Kohlenmonoxid und Halogen.

Gemäss der Erfindung kombiniert man im fertigen Katalysator die Titanhalogenidkomponente vorzugsweise mit einer Organoaluminiumkomponente, welche einen Komplex einer organischen Aluminiumverbindung mit einem Ester einer sauerstoffhaltigen organischen Säure enthält.

Als Magnesiumhalogenid kommen insbesondere Magnesiumbromid und — vorzugsweise — Magnesiumchlorid in Betracht. Als Ausgangsstoff kann jedes wasser- und/oder magnesiumoxidhaltige Magnesiumhalogenid dienen, z. B. das Handelsprodukt $MgCl_2 \cdot 6H_2O$ oder $MgCl_2 \cdot 4H_2O$. Bevorzugt wird ein bereits auf die übliche Weise entwässertes Magnesiumhalogenid, z. B. das Handelserzeugnis « wasserfreies Magnesiumchlorid ». Ein derartiges Produkt enthält gewöhnlich einiges Magnesiumoxid und ausserdem ein wenig nicht entferntes Wasser. Das Ausgangsprodukt wird anschliessend in einem Strom Kohlenstoffhalogeniddampf und/oder einem gasförmigen Gemisch von Kohlenmonoxid und Halogen auf eine Temperatur von 300 bis 700 °C erhitzt. Das Gasgemisch kann auch aus Phosgen gebildet werden, das bei der Reaktionstemperatur weitgehend in Kohlenmonoxid und Chlor dissoziiert ist. Als Kohlenstoffhalogenid wird Kohlenstofftetrachlorid oder Kohlenstofftetrabromid bevorzugt, obwohl auch andere bei der Reaktionstemperatur gasförmige Kohlenstoffhalogenide, wie Hexachloräthan verwendet werden können. Vorzugsweise hat das Kohlenstoffhalogenid nicht mehr als zwei Kohlenstoffatome je Molekül. Das Gasgemisch kann ggf. noch andere Bestandteile enthalten, z. B. Wasserstoffhalogenide oder Kohlendioxid, notwendig ist so etwas allerdings nicht. Das günstigste Molverhältnis von Kohlenmonoxid und Halogen im Gasgemisch ist etwa 1 : 1, aber andere Verhältnisse, z. B. zwischen 0,1 : 1 und 10 : 1, vorzugsweise zwischen etwa 0,5 : 1 und etwa 2 : 1, können verwendet werden.

Ein solches Verfahren zu der Herstellung eines Magnesiumhalogenids ist an sich bekannt und z. B. in der französischen Patentschrift 1 256 365, der amerikanischen Patentschrift 1 702 301 und der deutschen Patentschrift 379 203 dargestellt. Diese Veröffentlichungen haben aber überhaupt nichts zu tun mit der Polymerisation von Alkylenen-1.

Die Erhitzungsdauer beträgt z. B. 5 bis 100 Stunden und vorzugsweise 10 bis 30 Stunden.

Nach Ablauf der Behandlung lässt man das Magnesiumhalogenid abkühlen, worauf es in das Katalysatorsystem aufgenommen wird.

Das erfindungsgemässe Verfahren wird besonders beim stereospezifischen Polymerisieren von Alkylenen-1 mit 3-6 Kohlenstoffatomen je Molekül, wie Propylen, Butylen-1,4-Methylpentylen-1 und Hexylen-1, sowie beim Copolymerisieren dieser Alkylene-1 untereinander und/oder mit Äthylen verwendet. Sowohl Copolymere mit beliebiger Verteilung der verschiedenen monomeren Einheiten wie Blockcopolymerisat können hergestellt werden: Äthylen als Copolymerisat wird meistens in untergeordneten Mengen, z. B. maximal 30 und insbesonders zwischen 1 und 15 Gew.% einpolymerisert.

In der Titanhalogenidkomponente befindet sich das Titanhalogenid auf dem wasser- und magnesiumoxidfreien Magnesiumhalogenid als Trägerstoff. Als Titanverbindung kann jede halogenisierte Verbindung von zwei-, drei- oder vierwertigem Titan dienen einschliesslich Verbindungen, in denen ein Teil der Titanwertigkeiten für andere Bindungen als an Halogenatome benutzt wird. Als Halogen kommen vor allem Brom und Jod und insbesondere Chlor in Betracht. Beispiele sind $TiCl_3$, $TiCl_3 \cdot 1/3AlCl_3$, $TiCl_4$, $TiBr_4$, $TiJ_4$ und $Ti(isobutoxy)_2Cl_2$.

Das Titanhalogenid ist vorzugsweise als Komplex mit einer Lewisbase anwesend. Obwohl jede andere als Katalysatorkomponente bekannte Lewisbase Anwendung finden kann, werden Ester von sauerstoffhaltigen organischen Säuren, insbesondere Ester von aromatischen Carbonsäuren, wie Äthylbenzoat, Äthyl-p-methoxybenzoat, n-Butylbenzoat, Methyltoluat und Dimethylphthalat bevorzugt. Weitere Beispiele geeigneter Ester sind solche von gesättigten aliphatischen Carbonsäuren, z. B. Äthylacetat, Amylpropionat und Methylbutyrat, sowie Ester von ungesättigten aliphatischen Carbonsäuren, wie Methylmethacrylat, Äthylacrylat und Dimethylmaleinat. Die Säurekomponente des Esters enthält gewöhnlich 1-9 Kohlenstoffatome je Molekül oder ist eine natürliche Fettsäure, während die Alkoholkomponente der Ester gewöhnlich 1-6 Kohlenstoffatome je Molekül enthält. Andere Beispiele zweckmässiger Lewisbasen sind Triäthylamin, Pyridin, Äthylendiamin, Nitrobenzol und Diäthyläther.

Die Titanhalogenid-Lewisbase-Komplexe können auf jede bereits bekannte Weise gebildet werden, beispielsweise durch Zusammenbringen der Komponenten des Komplexes.

Das Titanhalogenid kann auf jede bekannte Weise auf die Trägersubstanz aufgebracht werden, z. B. durch einfaches Mischen und vorzugsweise durch gemeinsames Zermahlen. Bei Anwendung eines Komplexes aus Titanhalogenid und Lewisbase ist es möglich, zunächst den Komplex zu bilden und ihn auf den Träger aufzubringen, oder es kann zuerst das nicht komplexierte Titanhalogenid auf den Trägerstoff aufgebracht werden, worauf die Lewisbase eingemischt wird, entweder vor oder nach Beigabe der Organoaluminiumkomponente. Der Titangehalt der fertigen Titanhalogenidkomponente auf Träger beträgt gewöhnlich 0,1 bis 10 Gew.%. Die Lewisbase ist in einer Menge von 0 bis 5 Molekülen je Titanatom in der Titanhalogenidkomponente vorhanden.

Die Organoaluminiumkomponente umfasst einen Komplex einer organischen Aluminiumverbindung, insbesondere einer Trialkylaluminiumverbindung mit einem Ester einer sauerstoffhaltigen organischen Säure. Als Ester kommen dieselben Ester in Betracht, welche auch in der Titanhalogenidkomponente eingesetzt werden können, insbesondere die Ester aromatischer Carbonsäuren. Der Kürze halber sei auf vorstehendes hingewiesen. Als Trialkylaluminiumverbindng kommen insbesondere in Betracht Triäthylaluminium, Tripropylaluminium, Triisobutylaluminium, Triisoprenylaluminium, Trihexylaluminium und Trioctylaluminium, obwohl auch andere Trialkylaluminiumverbindungen anwendbar sind. Als Dialkylaluminiumhalogenid wird insbesondere ein Chlorid oder Bromid verwendet. Diäthylaluminiumchlorid und -bromid sind überaus geeignet, aber auch andere Dialkylaluminiumhalogenide mit vorzugsweise 1-10 Kohlenstoffatomen in der Alkylgruppe, wie z. B. Di-n-butylaluminiumchlorid und Methyl-n-butylaluminiumchlorid sind anwendbar.

Das Atomverhältnis Al : Ti liegt im allgemeinen zwischen 10 und 1 000 ; das Molekül-Atom-Verhältnis zwischen total gebundener Lewisbase im Katalysator und Ti liegt im allgemeinen zwischen 5 und 500.

Ausser dem Komplex einer organischen Aluminiumverbindung mit einem Ester einer sauerstoffhaltigen organischen Säure enthält die Organoaluminiumkomponente noch eine nicht komplexierte Organoaluminiumverbindung.

Ferner enthält die Organoaluminiumkomponente vorzugsweise sowohl eine Trialkylaluminiumverbindung als ein Dialkylaluminiumhalogenid oder ein Gemisch einer Dialkylmagnesiumverbindung und eines Monoalkylaluminiumdihalogenids. Die Alkylgruppen der Organoaluminiumverbindungen enthalten vorzugsweise je 1-10 Kohlenstoffatome. Die Alkylgruppen der Dialkylmagnesiumverbindung enthalten vorzugsweise je 1-10 Kohlenstoffatome oder bilden eine Palmityl- oder Stearylgruppe. Beispiele zweckmässiger Dialkylmagnesiumverbindungen sind Diäthylmagnesium, Di-n-butylmagnesium, Di-n-hexylmagnesium und Di-n-octylmagnesium. Das Monoalkylaluminiumdihalogenid ist vorzugsweise ein Chlorid oder Bromid. Äthylaluminiumchlorid oder -bromid ist überaus geeignet, es sind aber auch andere Monoalkylaluminiumhalogenide mit vorzugsweise 1-10 Kohlenstoffatomen in der Alkylgruppe, wie Isopropylaluminiumdichlorid, n-Butylaluminiumdibromid oder n-Octylaluminiumdichlorid anwendbar. Das Molverhältnis zwischen der Dialkylmagnesiumverbindung und dem Monoalkylaluminiumdihalogenid liegt z. B. zwischen 0,1 und 1 und vorzugsweise zwischen 0,3 und 0,6. Zu hohe Molverhältnisse ergeben unzureichend stereospezifische Katalysatoren, zu niedrige führen zu einer unzureichenden Katalysatoraktivität.

Bevorzugt wird die stöchiometrische Menge Ester in bezug auf die Trialkylaluminiumverbindung, abgesehen von der Estermenge, welche als Bestandteil der Titanhalogenidkomponente verwendet wird. Eine Menge über oder unter der stöchiometrischen Menge über oder unter der stöchiometrischen Menge ist zwar anwendbar, bietet jedoch keine Vorteile.

Die richtige stöchiometrische Estermenge in bezug auf die Trialkylaluminiumverbindung lässt sich mit Hilfe einer Mikrowellentitration der Trialkylaluminiumverbindung mit dem Ester auf die in Analytical Chemistry 37 (1965) Seite 229-233 geschilderte Weise ermitteln. Unter den gegebenen Polymerisationsbedingungen ist ein normaler Wert für die stöchiometrische molare Estermenge in bezug auf die Trialkylaluminiumverbindung etwa 1 : 1,5. Der ermittelte Wert wird bedingt durch den Reinheitsgrad und die Konzentrationen und kann z. B. im Bereich von 1 : 1,0 bis 1 : 2,0 und insbesondere zwischen 1 : 1,2 und 1 : 1,6 liegen.

Die Bedingungen, unter denen die Polymerisationsreaktion mit Hilfe der neuen Katalysatoren erfolgt, weichen nicht von den in der Technik bekannten ab. Die Reaktion kann in der Gasphase oder in Anwesenheit eines Verteilungsmittels stattfinden. Das Verteilungsmittel kann inert sein oder es kann sich um ein Monomeres in flüssiger Form handeln. Beispiele zweckmässiger Verteilungsmittel sind aliphatische, cycloaliphatische, aromatische und gemischt aromatisch/aliphatische Kohlenwasserstoffe mit 3-8 Kohlenstoffatomen, wie Propylen, Butylen-1, Butan, Isobutan, n-Hexan, n-Heptan, Cyclohexan, Benzol, Toluol sowie die Xylole.

Die Polymerisationstemperatur liegt gewöhnlich zwischen — 80 und 150 °C, vorzugsweise zwischen 40 und 100 °C. Der Druck liegt gewöhnlich zwischen 1 und 30 at.

Erforderlichenfalls kann das Molekulargewicht des Polymeren während des Polymerisationsvorgangs geregelt werden, z. B. indem man die Polymerisation in Anwesenheit von Wasserstoff oder eines anderen bekannten Molgewichtsreglers ausführt.

Für die Herstellung von Blockcopolymerisaten können Monomere in jeder gewünschten Reihenfolge zugesetzt werden.

Das erfindungsgemässe Verfahren ist vor allem von Bedeutung für die Herstellung von isotaktischem Polypropylen, von willkürlich verteilten Copolymeren von Propylen mit geringeren Äthylenmengen und von Blockcopolymerisaten aus Propylen und Äthylen.

Die Erfindung wird anhand der folgenden, nicht einschränkenden Beispiele erläutert.

### Beispiel I

$MgCl_2 \cdot 6H_2O$ wird entwässert, indem man es in einem Strom von gasförmigem Wasserstoffchlorid 10 Stunden lang auf 100°, danach 20 Stunden lang auf 200° und schliesslich 20 Stunden lang auf 400 °C erhitzt. Eine Analyse ergibt, dass das Produkt (Produkt a) noch 0,6 Gew.-% Wasser und 0,02 mgäq titrierbare Base je Gramm Magnesiumchlorid enthält.

Ein Teil von Produkt a wird anschliessend 24 Stunden lang auf 700 °C in einer Stickstoffatmosphäre erhitzt. Bei Analysierung zeigt sich, dass dieses Produkt maximal 0,1 Gew.-% Wasser und ferner 0,35 mgäq Base je g Magnesiumchlorid enthält (Produkt b).

Ein weiterer Teil von Produkt a wird 24 Stunden lang in einem Gasstrom von $Cl_2$ und CO(1 : 1 Vol) auf 700 °C erhitzt. Das Produkt (Produkt c) enthält $\leqslant 0,1$ Gew.-% $H_2O$ und $\leqslant 0,01$ mgäq Base je g Magnesiumchlorid.

Eine Menge von 6,5 ml wasserfreiem, in 75 ml wasserfreiem Benzin gelöstem Äthylbenzoat (im wesentlichen n-Hexan) wird in eine mit trockenem Stickstoff gespülte Lösung von 5 ml $TiCl_4$ in 125 ml Benzin bei 0 °C eingemischt, wobei der anfallende Komplex $TiCl_4 \cdot C_6H_5COOC_2H_5$ niederschlägt. Dieser Niederschlag wird in einer wasserfreien Stickstoffatmosphäre abfiltriert und getrocknet.

Eine Menge von 0,43 g des Komplexes $TiCl_4 \cdot C_6H_5COOC_2H_5$ und 5,60 g von Produkt c werden zusammen in einer Kugelmühle aus rostfreiem Stahl 17 Stunden lang in einer Stickstoffatmosphäre zermahlen.

Einem mit einem mechanischen Rührwerk ausgestatteten, und mit trockenem Stickstoff gespülten Autoklaven aus rostfreiem Stahl mit einem Inhalt von 2,5 Liter werden der Reihe nach beigegeben : 1,3 Liter wasserfreies Benzin, 0,62 ml Triäthylaluminium, 0,52 ml Äthylbenzoat, 0,58 ml Diäthylaluminiumchlorid und 0,37 g des zermahlenen und in 50 ml Benzin suspendierten Produktes. (Das Triäthylaluminium und das Äthylbenzoat sind in stöchiometrischen Mengen, ermittelt mit Hilfe der Mikrowellentitration, vorhanden). Nach Erwärmung des Autoklaven auf 60 °C wird der Druck mit Propylen auf 4 at gesteigert und ferner auf diesem Wert gehalten. Nach 1 Stunde wird die Polymerisationsreaktion eingestellt und das weisse pulverige Produkt durch Filtration isoliert.

Die Polymerisationsergebnisse sind in Tabelle A zusammengefasst.

### Vergleichsversuch 1

Der Katalysator wird auf gleiche Weise wie in Beispiel I hergestellt, nur wird jetzt Produkt a statt Produkt c als Komponente verwendet. Die Polymerisationsbedingungen sind dieselben wie in Beispiel I ; die Ergebnisse sind gleichfalls in Tabelle A erwähnt.

### Vergleichsversuch 2

Der Katalysator wird auf die in Beispiel I geschilderte Weise hergestellt, nur wird jetzt Produkt b statt Produkt c verwendet. Die Polymerisationsbedingungen entsprechen wiederum denen von Beispiel I, die Ergebnisse sind in Tabelle A erwähnt.

Tabelle A

| Beispiel | mgäq Base/ g $MgCl_2$ | Gew.-% $H_2O$ | Aktivität g PP/mMol Ti.h.$P_{C_3}$[1] | % lösliches Produkt[2] |
|---|---|---|---|---|
| I | $\leq 0,01$ | $\leq 0,1$ | 350 | 3,5 |
| Vergleichsversuch 1 | 0,02 | 0,6 | 230 | 7,8 |
| Vergleichsversuch 2 | 0,31 | $\leq 0,1$ | 315 | 7,4 |

[1] Mit $P_{C_3}$ wird die Propylenpartialspannung im Reaktor bezeichnet ; PP ist das anfallende Polypropylen.

[2] Polymerisat, das im Polymerisationsmedium löslich ist.

## Beispiel II

Die Entfernung von Wasser aus $MgCl_2 \cdot 6H_2O$ erfolgt, indem man dieses Produkt in einem Strom von gasförmigem Wasserstoffchlorid 10 Stunden lang auf 100 °C, anschliessend 20 Stunden lang auf 200 °C und schliesslich 20 Stunden lang auf 400 °C erhitzt. Eine Analyse zeigt, dass das Produkt 1,0 Gew.-% $H_2O$ und 0,05 mgäq Base/g $MgCl_2$ enthält (Produkt d).

Ein Teil von Produkt d wird darauf 24 Stunden lang in einem Stickstoffstrom auf 700 °C erhitzt. Dieses Produkt (Produkt e) enthält $\leq 0,1$ Gew.-% $H_2O$ und 0,38 mgäq Base/g $MgCl_2$.

Ein weiterer Teil von Produkt d wird 24 Stunden lang in einem Strom von CO und $Cl_2$ (1 : 1 Vol) auf 700 °C erhitzt. Dieses Produkt (Produkt f) enthält $\leq 0,1$ Gew.-% $H_2O$ und $\leq 0,01$ mgäq Base/g $MgCl_2$.

Eine Menge von 0,44 g des $TiCl_4 \cdot C_6H_5COOC_2H_5$-Komplexes (hergestellt gemäss Beispiel I) und 5,75 g von Produkt f werden gemeinsam in einer Kugelmühle aus rostfreiem Stahl 17 Stunden lang in einer trocknen Stickstoffatmosphäre zermahlen.

Einem mit trocknem Stickstoff gespülten und mit einem mechanischen Rührwerk versehenen Autoklaven aus rostfreiem Stahl mit einem Inhalt von 2,5 l werden der Reihe nach beigegeben :

1,3 l wasserfreies Benzin, 0,62 ml Triäthylaluminium, 0,52 ml Äthylbenzoat, 0,58 ml Diäthylaluminiumchlorid und 0,35 g des in 50 ml Benzin suspendierten zermahlenen Produktes. Nach Anlegung eines Drucks von 4 at mit Hilfe von Propylen wird die Temperatur des Autoklaven auf 60 °C gesteigert, wonach Druck und Temperatur konstant gehalten werden. Nach 1 Stunde wird die Polymerisation eingestellt und das weisse pulverige Produkt durch Filtration isoliert.

Siehe für die Polymerisationsergebnisse Tabelle B.

## Vergleichsbeispiel 3

Die Katalysatorherstellung erfolgt analog zu der in Beispiel II, nur wird jetzt statt Produkt f Produkt d als Komponente benutzt. Die Polymerisationsbedingungen sind dieselben wie in Beispiel II. Die Ergebnisse sind in Tabelle B zusammengetragen.

## Vergleichsbeispiel 4

Die Herstellung des Katalysators erfolgt wie beschrieben in Beispiel II, jetzt wird aber statt Produkt f Produkt e als Komponente verwendet. Die Polymerisationsbedingungen sind dieselben wie in Beispiel II. Siehe für die Ergebnisse Tabelle B.

Tabelle B

| Beispiel | mgäq Base/ g $MgCl_2$ | Gew.-% $H_2O$ | Aktivität g PP/mMol Ti.h.$P_{C_3}$ | % lösliches Polymerisat |
|---|---|---|---|---|
| II | $\leq 0,01$ | $\leq 0,1$ | 420 | 5,6 |
| Vergleichsversuch 3 | 0,05 | 1,0 | 330 | 7,2 |
| Vergleichsversuch 4 | 0,38 | $\leq 0,1$ | 420 | 7,6 |

## Beispiel III

Der Katalysator wird auf analoge Weise wie in Beispiel II hergestellt, nur werden jetzt 1,92 g des

TiCl$_4$ · C$_6$H$_5$COOC$_2$H$_5$-komplexes mit 3,78 g von Produkt f zermahlen.

Auch die Polymerisation erfolgt analog zu der in Beispiel II, allerdings mit der Ausnahme, dass jetzt dem Autoklaven beigegeben werden : 1,3 l wasserfreies Benzin, 3,1 ml Triäthylaluminium, 2,6 ml Äthylbenzoat, 2,9 ml Diäthylaluminiumchlorid und 0,50 g des zermahlenen, in 50 ml Benzin suspendierten Produktes.

Die Polymerisationsresultate sind in Tabelle C erwähnt.

### Vergleichsversuch 5

Die Katalysatorherstellung erfolgt analog z der in Beispiel III, die einzeige Ausnahme ist, dass jetzt statt Produkt f Produkt d als Komponente gewählt wird. Die Polymerisationsbedingungen sind dieselben wie in Beispiel III. Die Ergebnisse sind in Tabelle C zusammengetragen.

### Versuchsbeispiel 6

Auch jetzt wird der Katalysator auf gleiche Weise hergestellt wie in Beispiel III, nur wird statt Produkt f Produkt e als Komponente benutzt. Die Polymerisationsbedingungen sind dieselben wie in Beispiel III. Die diesbezüglichen Ergebnisse sind in Tabelle C aufgeführt.

### Tabelle C

| Beispiel | mgäq Base/ g MgCl$_2$ | Gew.-% H$_2$O | Aktivität g PP/mMol Ti.h.P$_{C_3}$ | % lösliches Polymerisat |
|---|---|---|---|---|
| III | ≤ 0,01 | ≤ 0,1 | 220 | 4,0 |
| Vergleichsversuch 5 | 0,05 | 1,0 | 180 | 5,0 |
| Vergleichsversuch 6 | 0,38 | ≤ 0,1 | 130 | 5,7 |

### Beispiel IV

Die Katalysatorherstellung erfolgt analog zu der in Beispiel II, jetzt werden aber 1,76 g des TiCl$_4$ · C$_6$H$_5$COOC$_2$H$_5$-Komplexes mit 3,42 g von Produkt f zermahlen.

Auch die Polymerisation entspricht der von Beispiel II, nur werden der Reihe nach dem Reaktor beigegeben : 1,3 l Benzin, 0,62 ml Triäthylaluminium, 0,52 ml Äthylbenzoat, 0,58 ml Diäthylaluminiumchlorid und 0,11 g des zermahlenen und in 50 ml Benzin suspendierten Produktes.

Die mittlere Polymerisationswirkung beträgt 200 g PP/mMol Ti.h.P$_{C_3}$ und der Gehalt an im Polymerisationsmedium löslichem Stoff beläuft sich auf 2,1 %.

### Beispiel V

Die Herstellung des Katalysators erfolgt analog zu der in Beispiel II, nur werden jetzt 2,18 g des TiCl$_4$ · C$_6$H$_5$COOC$_2$H$_5$-Komplexes mit 3,04 g von Produkt f zermahlen.

Auch die Polymerisation findet auf die in Beispiel II geschilderte Weise statt, nur werden jetzt dem Autoklaven der Reihe nach beigegeben : 1,3 l wasserfreies Benzin, 0,62 ml Triäthylaluminium, 0,52 ml Äthylbenzoat, 0,58 ml Diäthylaluminiumchlorid und 0,082 g des zermahlenen und in 50 ml Benzin suspendierten Produktes.

Die mittlere Polymerisationsaktivität beträgt 200 g PP/mMol Ti.h.P$_{C_3}$ und der Gehalt des im Polymerisationsmedium gelösten Polymerisats 2,2 %.

### Beispiel VI

Der Katalysator wird auf dieselbe Weise hergestellt wie in Beispiel II, jetzt werden aber 2,64 g des TiCl$_4$ · C$_6$H$_5$COOC$_2$H$_5$-Komplexes gemeinsam mit 2,52 g von Produkt f zermahlen.

Einem mit trocknem Stickstoff gespülten und mit einem mechanischen Rührwerk versehenen Autoklaven aus rostfreiem Stahl mit einem Inhalt von 2,5 l werden der Reihe nach beigegeben : 1,3 l wasserfreies Benzin, 1,90 ml Tri-n-bitylaluminium, 0,75 ml Äthylbenzoat und 0,067 g des in 50 ml Benzin suspendierten zermahlenen Produktes. Nach Angelung eines Drucks von 7 at mit Hilfe von Propylen wird die Temperatur des Autoklaven auf 60 °C gesteigert, wonach Druck und Temperatur konstant gehalten werden. Nach 2 Stunden wird die Polymerisation eingestellt und das weisse pulverige Produkt durch Filtration gewonnen.

Die mittlere Polymerisationsaktivität beträgt 135 g PP/mMol Ti.h.P$_{C_3}$ und der Gehalt des im Polymerisationsmedium löslichen Stoffes beläuft sich auf 2,2 %.

Beispiel VII

Der Katalysator wird auf dieselbe Weise wie in Beispiel IV hergestellt. Die Polymerisation erfolgt analog zu der von Beispiel II, nur werden dem Autoklaven der Reihe nach beigegeben : 1,3 l wasserfreies Benzin, 6 ml einer 3,88-molaren Lösung von Triisobutylaluminium in Benzin, 1,7 ml einer 7-molaren Lösung von Äthylbenzoat in Benzin und 0,085 des zermahlenen und in 50 ml Benzin gelösten Produktes.

Die mittlere Polymerisationsaktivität beträgt 370 g PP/mMol Ti.h.$P_{C_3}$ und der Gehalt des im Polymerisationsmedium löslichen Stoffes 4,3 %.

**Patentansprüche**

1. Katalytische Titanhalogenidkomponente auf einem aktivierten Magnesiumhalogenid als Trägerstoff, verwendbar für die Polymerisation von Alkylenen-1 oder Copolymerisation von Alkylenen-1 untereinander oder mit Äthylen, dadurch gekennzeichnet, dass das Magnesiumhalogenid weniger als 0,2 Gew.-% Wasser, und was den Magnesiumoxidgehalt betrifft, weniger als 0,1 mgäq titrierbare Base je g Magnesiumhalogenid enthält und gewonnen ist durch Erhitzung eines wasser- und/oder magnesiumoxidhaltigen Magnesiumhalogenids in einem Gasstrom von Kohlenstoffhalogeniddampf und/oder einem Gemisch von Kohlenmonoxid und Halogen.

2. Katalytische Titanhalogenidkomponente gemäss Anspruch 1, dadurch gekennzeichnet, dass das Magnesiumhalogenid maximal 0,1 Gew.-% Wasser und, was den Magnesiumoxidgehalt betrifft, maximal 0,01 mgäq titrierbare Base je g Magnesiumhalogenid enthält.

3. Katalytische Titanhalogenidkomponente gemäss Anspruch 1 oder 2, dadurch gekennzeichnet, dass es sich beim Magnesiumhalogenid um Magnesiumchlorid handelt.

4. Katalytische Titanhalogenidkomponente gemäss einem der Ansprüche 1-3, dadurch gekennzeichnet, dass sie aus einem Komplex einer halogenierten Titanverbindung mit einer Lewisbase auf einem wasser- und magnesiumoxidfreien Magnesiumchlorid als Trägerstoff besteht.

5. Katalytische Titanhalogenidkomponente gemäss Anspruch 4, dadurch gekennzeichnet, dass die Lewisbase, mit der die Titanverbindung einen Komplex bildet, ein Ester einer sauerstoffhaltigen organischen Säure ist.

6. Katalytische Titanhalogenidkomponente gemäss Anspruch 5, dadurch gekennzeichnet, dass der Ester ein Ester einer aromatischen Carbonsäure ist.

7. Verfahren zur Polymerisation von Alkylenen-1 oder Copolymerisation von Alkylenen-1 untereinander oder mit Äthylen unter Verwendung eines Katalysatorsystems, das eine Titanhalogenidkomponente auf einem aktivierten Magnesiumhalogenid als Trägerstoff und eine Organoaluminiumkomponente enthält, welche Organoaluminiumkomponente einen Komplex einer organischen Aluminiumverbindung mit einem Ester einer sauerstoffhaltigen organischen Säure enthält, dadurch gekennzeichnet, dass eine Titanhalogenidkomponente gemäss einem der Ansprüche 1-6 verwendet wird.

8. Verfahren gemäss Anspruch 7, dadurch gekennzeichnet, dass die Organoaluminiumkomponente ausser dem Komplex einer organischen Aluminiumverbindung mit einem Ester einer sauerstoffhaltigen organischen Säure noch eine nichtkomplexierte Organoaluminiumverbindung enthält.

9. Verfahren gemäss Anspruch 7 oder 8, dadurch gekennzeichnet, dass die Organoaluminiumkomponente sowohl eine Trialkylaluminiumverbindung als ein Dialkylaluminiumhalogenid enthält.

10. Verfahren gemäss Anspruch 7 oder 8, dadurch gekennzeichnet, dass die Organoaluminiumkomponente sowohl eine Trialkylaluminiumverbindung als ein Gemisch aus einer Dialkylmagnesiumverbindung und einem Monoalkylaluminiumhalogenid enthält.

**Claims**

1. Catalytic titanium halide component on an activated magnesium halide support, which can be used for the polymerization of 1-alkenes or for the copolymerization of 1-alkenes with each other or with ethylene, characterized in that the amount of water in the magnesium halide is less than 0.2 per cent by weight and the amount of magnesium oxide less than 0.1 mgeq titratable base per gram of magnesium halide, and that the magnesium halide has been prepared by heating a magnesium halide, containing water and/or magnesium oxide, in a gaseous flow of carbon halide vapour and/or mixture of carbon monoxide and a halogen.

2. Catalytic titanium halide component according to claim 1, characterized in that the amount of water in the magnesium halide is at most 0.1 per cent by weight, and the amount of magnesium oxide at most 0.01 mgeq of titratable base per gram of magnesium halide.

3. Catalytic titanium halide component according to claim 1 or 2, characterized in that the magnesium halide is magnesium chloride.

4. Catalytic titanium halide component according to any one of the claims 1-3, characterized in that it consists of a complex of halogenated titanium compound with a Lewis base on a magnesium chloride support which is free from water and magnesium oxide.

5. Catalytic titanium halide component according to claim 4, characterized in that the Lewis base that forms a complex with the titanium compound is an ester of an organic acid containing oxygen.

6. Catalytic titanium halide component according to claim 5, characterized in that the ester is an ester of an aromatic carboxylic acid.

7. Process for the polymerization of 1-alkenes or for the copolymerization of 1-alkenes with each other or with ethylene with the use of a catalyst system that contains a titanium halide component on an activated magnesium halide support and an organoaluminium component containing a complex of an organic aluminium compound with an ester of an organic acid containing oxygen, the process being characterized in that a titanium halide component according to any one of the claims 1-6 is used.

8. Process according to claim 7, characterized in that, in addition to the complex of an organic aluminium compound with an ester of an organic acid containing oxygen, the organoaluminium component contains a non-complexed organoaluminium compound.

9. Process according to claim 7 or 8, characterized in that the organoaluminium component contains a trialkylaluminium compound as well as a dialkylaluminium halide.

10. Process according to claim 7 or 8, characterized in that the organoaluminium compound contains a trialkylaluminium compound as well as a mixture of a dialkylmagnesium compound and a monoalkylaluminium halide.


## Revendications

1. Composant catalytique halogénure de titane sur un halogénure de magnésium activé servant de support, utilisable pour la polymérisation d'alcènes-1 ou la copolymérisation d'alcènes-1 entre eux ou avec l'éthylène, caractérisé en ce que l'halogénure de magnésium contient moins de 0,2 % en poids de l'eau et, pour ce qui concerne la teneur en magnésie, moins de 0,1 milliéquivalent de base titrable par g d'halogénure de magnésium, et est préparé par chauffage d'un halogénure de magnésium contenant de l'eau et/ou de la magnésie dans un courant gazeux de vapeurs d'halogénure de carbone et/ou d'un mélange d'oxyde de carbone et d'un halogène.

2. Composant catalytique halogénure de titane selon la revendication 1, caractérisé en ce que l'halogénure de magnésium contient au maximum 0,1 % en poids d'eau et, pour ce qui concerne la teneur en magnésie, au maximum 0,01 milliéquivalent de base titrable par g d'halogénure de magnésium.

3. Composant catalytique halogénure de titane selon la revendication 1 ou 2, caractérisé en ce que l'halogénure de magnésium est le chlorure de magnésium.

4. Composant catalytique halogénure de titane selon l'une des revendications 1 à 3, caractérisé en ce qu'il consiste en un complexe d'un composé halogéné du titane avec une base de Lewis sur un chlorure de magnésium anhydre et exempt de magnésie qui sert de support.

5. Composant catalytique halogénure de titane selon la revendication 4, caractérisé en ce que la base de Lewis avec laquelle le composé du titane forme un complexe consiste en un ester d'un acide organique oxygéné.

6. Composant catalytique halogénure de titane selon la revendication 5, caractérisé en ce que l'ester est un ester d'acide carboxylique aromatique.

7. Procédé de polymérisation des alcènes-1 ou de copolymérisation des alcènes-1 entre eux ou avec l'éthylène par utilisation d'un système catalyseur un composant halogénure de titane sur un halogénure de magnésium activé qui sert de support et un composant d'organo-aluminium, lequel composant d'organo-aluminium contient un complexe d'un composé organique de l'aluminium avec un ester d'un acide organique oxygéné, caractérisé en ce que l'on utilise un composant halogénure de titane selon l'une des revendications 1 à 6.

8. Procédé selon la revendication 7, caractérisé en ce que le composant d'organo-aluminium contient, outre le complexe d'un composé organique de l'aluminium avec un ester d'un acide organique oxygéné, encore un composé d'organo-aluminium non complexé.

9. Procédé selon la revendication 7 ou 8, caractérisé en ce que le composant d'organo-aluminium contient à la fois un composé de trialkylaluminium et un halogénure de dialkyl-aluminium.

10. Procédé selon la revendication 7 ou 8, caractérisé en ce que le composant d'organo-aluminium contient à la fois un composé de trialkyl-aluminium et un mélange d'un composé de dialkyl-magnésium et d'un halogénure de mono-alkyl-aluminium.